# EUROPÄISCHE PATENTANMELDUNG

(11) **EP 1 792 709 A2**
(43) Veröffentlichungstag der Anmeldung: **06.06.2007**
(21) Anmeldenummer: 06024666.7
(22) Anmeldetag: 29.11.2006
(51) Int. Cl.: B29C 70/50, B29C 70/88, B29C 70/78

(54) **Integration von leitenden Strukturen für im Heisspressverfahren (SMC/BMC) hergestellte Kunststoffteile**

(30) Priorität: 30.11.2005 DE 102005057026
(71) Anmelder: Hirschmann Car Communication GmbH, 72654 Neckartenzlingen (DE)
(72) Erfinder: Petersen, Ingmar, 73733 Esslingen (DE); Schwarz, Bernd, 72141 Waldorfhäslach (DE); Pfletschinger, Markus, 72800 Eningen (DE)
(74) Vertreter: Thul, Hermann

(57) **Zusammenfassung**

Fahrzeugbauteil aus einem elektrisch nicht leitfähigen Material, wobei erfindungsgemäss vorgesehen ist, dass ein aus einem elektrisch nicht leitfähigen Material bestehender und elektrisch leitfähige Strukturen aufweisender Träger an dem Fahrzeugbauteil befestigt ist, wobei die Befestigung des Trägers mittels eines Heißpressverfahrens an das Fahrzeugbauteil erfolgt und so in seine Oberfläche ein Träger mit leitenden Strukturen während des Heißpressverfahrens gefügt wird.

## Beschreibung

Die Erfindung betrifft ein Fahrzeugbauteil aus einem elektrisch nicht leitfähigen Material, gemäß den Merkmalen des Oberbegriffes des Patentanspruches 1.

Es ist schon grundsätzlich bekannt geworden, Fahrzeugbauteile aus einem elektrisch nicht leitfähigen Material, wie z. B. Kunststoff, herzustellen. Solche Kunststoff-Fahrzeugbauteile haben den Vorteil einer sehr hohen Designfreiheit, geringes Gewicht und einfache Herstellbarkeit.

Daneben ist bei den Automobilherstellern der Wunsch vorhanden, an oder in diesem Kunststoff-Fahrzeugbauteil elektrisch leitfähige Strukturen (ein zum UP inkompatibler Träger mit einer kompatiblen Leitpaste (Harzbasis der Paste) bedruckt) zu integrieren, um beispielsweise Antennenstrukturen für Fahrzeugantennen realisieren zu können. Neben diesen leitfähigen Strukturen in oder auf dem Fahrzeugbauteil als Antennenstrukturen kommen auch elektrisch leitfähige Bereiche für die Signalübertragung und/oder Stromversorgung in Betracht. Auch die Stromversorgung kann auf diesem Wege bewerkstelligt werden.

Der Erfindung liegt daher die Aufgabe zugrunde, ein Fahrzeugbauteil aus einem elektrisch nicht leitfähigem Material, insbesondere einem Kunststoff, dahingehend zu verbessern, dass die Integration bzw. Befestigung von elektrisch leitfähigen Strukturen an dem Fahrzeugbauteil für die gewünschten Einsatzzwecke verbessert ist, insbesondere die eingangs geschilderten Nachteile vermieden werden und das Fahrzeugbauteil sowie die elektrisch leitfähigen Strukturen mit der für den jeweiligen Anwendungszweck erforderlichen Präzision und Formgebung realisiert werden können.)

Diese Aufgabe ist durch die Merkmale des Patentanspruches 1 gelöst.

Erfindungsgemäß ist vorgesehen, dass ein aus einem elektrisch nicht leitfähigen Material bestehender und elektrisch leitfähige Strukturen aufweisender Träger an dem Fahrzeugbauteil befestigt ist, wobei die Befestigung des Trägers mittels eines Heißpressverfahrens an das Fahrzeugbauteil erfolgt. Das Fahrzeugbauteil selber besteht aus einem Kunststoffmaterial, wobei hier für die Erfindung besonders wesentlich und vorteilhaft die Materialien SMC (Sheet Moulding Compound, auch Harzmatte oder Prepeg genannt) oder BMC ist. Vorteil ist, dass ein im Heißpressverfahren herzustellendes Kunststoffteil während der Formgebung mit einem harz-imprägnierten Papier oder einer Folie verpresst wird. Im Vorwege wurde auf diesen Träger die gewünschte Struktur in Form von z. B. Silberleitpaste mittels eines Druckverfahren aufgebracht.
Beispielhaft kann hier das Einbringen von mit Silber bedruckten und mit Melaminharz imprägniertem Papier in den Formgebungsprozess SMC (Sheet Moulding Compoud) genannt werden. Durch die Presskraft und Temperatur im Werkzeug werden die Werkstoffe miteinander verpresst. Des Weiteren führt dies zu einer günstigen Volumenreduzierung der Leiterbahnen und somit zu höheren Leitwerten. Die Leiterbahnen liegen nach der Entformung nun je nach Einbringung des Trägers an der Oberfläche, oder unter einer dünnen Harzschicht. Auch ist es möglich, den Träger zwischen schon im Vorwege zwischen die zugeschnitten UP-Harzmatten (UP=ungesättigte Polyesterharze) zu legen. Auch hier würden dann die Leiterbahnen innenliegend sein.
Der Werkstoff muss jedoch nicht in Form von Zuschnitten (Harzmatten/Prepag) vorliegen. Auch die Verpressung mit einem Gemenge, wie im Fall von BMC (Bulk Moulding Comound) ist möglich.

In einer weiteren Ausgestaltung der Erfindung ist der Träger eine Kunststofffolie und somit flexibel handhabbar und kann damit den Außenkonturen und den geometrischen Erstreckungen des Fahrzeugbauteiles angepasst werden. Außerdem ist die Handhabung einer solchen Kunststofffolie beim Herstellverfahren, d. h. beim Verpressen mit dem Fahrzeugbauteil, besser handhabbar als ein starrer Träger. Daneben sind aber auch starre Träger wie z. B. Leiterplatten einsetzbar, die insbesondere dann zur Anwendung kommen, wenn auch das Fahrzeugbauteil selber zumindest teilweise eben gestaltet ist.

Weitere vorteilhafte Ausgestaltungen der Erfindung sind in den Unteransprüchen angegeben, wobei verfahrenstechnische und vorrichtungsmäßige Ausgestaltungen und Vorteile im Weiteren noch beschrieben werden.

SMC ist eine Formmasse auf Basis glasfaserverstärkter UP-Harze. Es gehört zu den Duroplasten. Nach DIN 16913 sind fünf verschiedenen SMC-Typen genormt. Daneben gibt es eine große Anzahl von nicht genormten SMC-Rezepturen, zugeschnitten auf die jeweilige Anwendung.

Anwendungsbeispiele für SMC sind folgende (nicht abschließende Aufzählung): PKW- und LKW-Bau: Motorhauben, Kofferraumdeckel, Zylinderkopfdeckel, Geräuschkapselung im Motorraum- und Auspuffbereich, Traktordächer, Spoiler, Teile für die Innen- und Außenverkleidung und dergleichen.

BMC liegt als formlose, teigige Masse vor. Es wird wie SMC in der Heißpresstechnik verarbeitet. Zum Teil findet BMC auch in der Spritzgusstechnik Anwendung. SMC wird ebenfalls aus allen üblichen duroplastischen Matrixsystemen hergestellt.

Anwendungsbeispiele für BMC sind folgende (nicht abschließende Aufzählung): Reflektoren, Zylinderkopfdeckel, Hausanschlusskästen, Leitungsschutzschalter (LS-Schalter), Lagerschilde, Sicherungsleisten, Isolatoren, Haushaltsgeräte und dergleichen.

Vorteile von SMC und BMC sind: Ähnlicher Ausdehnungskoeffizient wie Stahl, hoher Dämpfungsfaktor, Recycelfähigkeit, insbesondere die Dichte führt zu Gewichtsvorteilen gegenüber Stahl, geringere Werkzeugkosten, Class-A-Oberflächen möglich, Temperaturstabilität, Feuerresistenz, Korrosionsbeständigkeit, Designfreiheit, hoher Maschinendurchsatz und kurze Prozesszeiten. Des Weiteren ist es lackierbar. Es ist daher möglich, die hinter- bzw. eingepresste leitende Struktur überzulackieren, was eine zusätzliche Schutzfunktion sowie auch gestalterische Vorteile nach sich zieht.

Die Erzeugung der Strukturen erfolgt vorzugsweise im Siebdruckverfahren durch das Verdrucken von Leitpasten. Weiterhin kann oder sollte der Träger über Einbuchtungen und/oder Aussparungen verfügen und/oder Markierungen aufweisen. Dies vereinfacht die Einbringung, Positionierung und Lagestabilität des Trägers im Werkzeug, beziehungsweise optimiert die für den Träger zur Verfügung stehende Fläche.

Alternativ kann der Träger entfernt werden. Dabei wird die Folie (ein zum UP inkompatibler Träger mit einer kompatiblen Leitpaste (Harzbasis der Paste)) bedruckt, ins Werkzeug eingelegt und die elektrisch leitende Struktur zum SMC/BMC ausgerichtet. Je nach Prozess ist die Folie entfernbar, wobei dann die Strukturen in/auf SMC/BMC übergegangen sind. Hierbei ist eine materialmäßige Abstimmung von den beteiligten Werkstoffen notwendig.

Um eventuelle Ausgasung zu ermöglichen, kann der Träger partielle Aussparungen aufweisen. Diese können bei dem Hinterpressen mit SMC/BMC gefüllt ("zugequetscht") werden. In dem Fall liegt das SMC an der Oberfläche des entstandenen Fahrzeugbauteils und ermöglicht die Ausgasung. Auch mechanisches Fügen ist so möglich.

## Patentansprüche

**1.** Fahrzeugbauteil aus einem elektrisch nicht leitfähigen Material, **dadurch gekennzeichnet, dass** ein aus einem elektrisch nicht leitfähigen Material bestehender und elektrisch leitfähige Strukturen aufweisender Träger an dem Fahrzeugbauteil befestigt ist, wobei die Befestigung des Trägers mittels eines Heißpressverfahrens an das Fahrzeugbauteil erfolgt und so in seine Oberfläche ein Träger mit leitenden Strukturen während des Heißpressverfahrens gefügt wird.

**2.** Fahrzeugbauteil nach Anspruch 1, **dadurch gekennzeichnet, dass** der Träger unlösbar mit dem Fahrzeugbauteil verbunden ist und die elektrisch leitfähigen Strukturen in oder auf der Oberfläche des Fahrzeugbauteils angeordnet sind.

**4.** Fahrzeugbauteil nach Anspruch 1 oder 2, **dadurch gekennzeichnet, dass** der Träger unlösbar mit dem Fahrzeugbauteil verbunden ist und die elektrisch leitfähigen Strukturen innenliegend sind.

**5.** Fahrzeugbauteil nach einem der vorhergehenden Ansprüche, **dadurch gekennzeichnet, dass** der Träger partielle Aussparungen verfügt, welche die Ausgasung des Fahrzeugbauteils ermöglichen.

**6.** Fahrzeugbauteil nach einem der vorhergehenden Ansprüche, **dadurch gekennzeichnet, dass** der Träger insbesondere mit einem Harz imprägnierte Kunststofffolie ist.

**7.** Fahrzeugbauteil nach einem der vorhergehenden Ansprüche, **dadurch gekennzeichnet, dass** der Träger während des Pressprozesses durch ein weiteres Medium von der Oberfläche des Werkzeuges getrennt ist.

**8.** Fahrzeugbauteil nach einem der vorhergehenden Ansprüche, **dadurch gekennzeichnet, dass** der Träger während des Pressprozesses durch ein weiteres Medium von der Oberfläche des Werkzeuges getrennt ist und dieses weitere Medium für ein Trennmittel nicht durchdringbar ist.

**9.** Fahrzeugbauteil nach Anspruch 1, **dadurch gekennzeichnet, dass** der Heißpressprozess SMC und/oder BMC ist.
